## Europäisches Patentamt

## European Patent Office

## Office européen des brevets

(11) Veröffentlichungsnummer: **0 026 926**
**A1**

(12) **EUROPÄISCHE PATENTANMELDUNG**

(21) Anmeldenummer: **80105987.4**

(22) Anmeldetag: **03.10.80**

(51) Int. Cl.³: **A 01 C 7/04**

(30) Priorität: **04.10.79 DE 2940247**

(43) Veröffentlichungstag der Anmeldung: **15.04.81**
**Patentblatt 81/15**

(84) Benannte Vertragsstaaten: **FR IT NL**

(71) Anmelder: **Franz Kleine Maschinenfabrik GmbH & Co.,**
**Ferdinand-Henze-Strasse, D-4796 Salzkotten (DE)**

(72) Erfinder: **Romberg, Heinz-Werner, Ing. grad.,**
**Görresstrasse 35, D-4780 Lippstadt (DE)**
Erfinder: **Kaup, Ferdinand, Ing. grad., Zur alten**
**Buche 19, D-4791 Wünnenberg-Helmern (DE)**

(74) Vertreter: **Patentanwälte Dipl.-Ing. Rudolf Bibrach**
**Dipl.-Ing. Elmar Rehberg, Bibrach und Rehberg**
**Postfach 7 38, D-3400 Göttingen (DE)**

(54) **Einzelkornsägerät.**

(57) Einzelkornsägeräte dienen dazu, die einzelnen Samenkörner in eine Reihe in möglichst gleichmässigem gegenseitigen Abstand abzulegen. Hierzu wird ein umlaufend angetriebenes Zellenrad benutzt, welches einzelne Zellen (12) zur Aufnahme je eines Samenkornes aufweist. Gelangt die Zelle (12) in den Bereich des gehäuseseitig vorgesehenen Saatgutauslasses, so kann das Samenkorn aus der Zelle heraus und auf den Boden fallen. Der Mangel bekannter Sägeräte besteht darin, dass die Genauigkeit der Körnerfolge unerwünscht gestört ist, was darauf zurückzuführen ist, dass sich die Samenkörner aus der Zelle (12) des Zellenrades sehr unterschiedlich ablösen. Die Aufgabe der Erfindung besteht deshalb darin, dass Einzelkornsägerät der in Rede stehenden Art dahingehend zu verbessern, dass die Samenkörner leichter aus dem Saatgutauslass bzw. aus der Zelle (12) im Bereich des Saatgutauslasses heraustreten können, so dass eine gleichmässige Ablage erzielt wird.

Erfindungsgemäss wird dies dadurch erreicht, dass die die Zelle (12) bildende Öffnung auf der Aussenseite des Zellenrades in eine nach aussengerichtete, ausgefräste Erweiterung (12c) übergeht. In Verbindung mit der schräggestellten Wand (12a) der Zelle (12) werden die einzelnen Samenkörner leichter aufgenommen. Hierzu dient auch die Einlaufschute (12b), während die ausgefräste Erweiterung (12c) in einem Winkel (a) den Heraustritt des Samens aus der Zelle begünstigt.

Einzelkornsägerät

Die Erfindung betrifft ein Einzelkornsägerät, bestehend
aus einem um eine horizontale Achse umlaufenden, aus
einem einseitig abgeschlossenen Hohlzylinder gebildeten
Zellenrad, welches in seinem offenden Rand,über den Umfang verteilt, Zellen zur Aufnahme jeweils eines Samenkorns aufweist und einer feststehenden den Saatguteíntritt aufweisenden Abdeckwand, die mit einem rundumlaufenden axial vorspringenden, lediglich den Saatgutaustritt
freilassenden Rand das Zellenrad auf der Außenseite umfaßt, während innerhalb dieses Randes ein Abdeckring
vorgesehen ist, der das Herausfallen der beim Umlauf des
Zellenrades durch die Zellen aufgenommenen Samenkörner
bis zum Saatgutaustritt hin verhindert, wobei die Zellen
auf der der Drehrichtung des Zellenrades abgekehrten
Seite jeweils durch eine Wand begrenzt sind, die in
Drehrichtung gesehen von innen nach außen in einem nach
hinten geneigten Winkel zur Ringfläche verläuft.

Ein Einzelkornsägerät dient zum Aussäen des Samens für
Feldfrüchte, wobei die Samenkörner einer Reihe hintereinander in vorherbestimmtem Abstand auf das Feld abgelegt werden. Durch die FR-PS 95 940 (Zusatz zu
FR-PS 1 492 963) sind bereits solche Sägeräte bekanntgeworden, bestehend aus einem um eine horizontale
Achse umlaufenden, aus einem einseitig abgeschlossenen
Hohlzylinder gebildeten Zellenrad, welches in seinem
offenen Rand über den Umfang verteilt, Zellen zur Aufnahme jeweils eines Samenkornes aufweist und einer
feststehenden den Saatguteintritt aufweisenden Abdeckwand, die mit einem rundumlaufenden axial vorspringenden, lediglich den Saatgutaustritt freilassenden Rand das Zellenrad auf der Außenseite umfaßt, während innerhalb dieses Randes ein Abdeckring vorgesehen ist, der das Herausfallen der beim Umlauf
des Zellenrades durch die Zellen aufgenommenen Samenkörner bis zum Saatgutaustritt hin verhindert.

Der Mangel solcher Sägeräte besteht darin, daß die
Genauigkeit der Körnerfolge unerwünscht gestört ist,
was auf einen zu kurzen Bereich, in dem die Samenkörner in das Zellenrad übergeführt werden, zurückzuführen ist. Oft werden die im Zellenrad vorgesehenen
Zellen nicht ausreichend mit Samen beschickt bzw.
fallen die Samenkörner aus den Zellen wieder heraus.

Ein weiterer Mangel besteht darin, daß die Samenkörner beim Durchlaufen unter dem Abdeckring beschädigt werden und dann nicht mehr keimfähig sind.

Aufgabe der Erfindung ist es, diese Mängel zu beheben
und ein Einzelkornsägerät zu schaffen, welches eine
exakte Füllung der Zellen des Zellenrades mit jeweils einem Samenkorn gewährleistet und die Samenkörner vom Zellenrad ohne mechanische Beanspruchungen
und ohne die Gefahr einer Beschädigung bis zum Saatgutauswurf gefördert werden.

Erfindungsgemäß wird dies dadurch erreicht, daß die die
Zelle bildende Öffnung auf der Außenseite des Zellenrades in eine nach außen gerichtete ausgefräste Erweiterung
übergeht. In Verbindung dieses Merkmals mit dem Merkmal,
gemäß welchem die Zellen auf der der Drehrichtung des
Zellenrades abgekehrtenSeite jeweils durch eine Wand
begrenzt sind, die in Drehrichtung gesehen von innen
nach außen in einem nach hinten geneigten Winkel zur Ringfläche verläuft, entsteht der besondere Vorteil, daß der Winkel des Abdeckringes, über den er sich erstreckt, kleiner als 270° sein kann, so daß auf diese Weise der Füllbereich entsprechend vergrößert wird und die Länge des Abdeckringes auf ein Mindestmaß beschränkt ist. Damit wird auch die Reibung der Samenkörner in den Zellen des Zellenrades verringert. Infolge des sich nach außen erweiternden Zellenaustrittes durch die ausgefräste Erweiterung ist es weiterhin möglich, die den Saatgutaustritt ermöglichende Aussparung, also den Saatgutauslaß in Umfangsrichtung des Zellenrades gesehen kürzer zu gestalten. Damit wird erreicht, daß der Ablegeabstand zwischen den einzelnen Samenkörnern genauer als bisher eingehalten werden kann.

Damit das einzelne Samenkorn bei seinem Weg in der Zelle des Zellenrades nicht gequetscht oder anders mechanisch beeinträchtigt wird, kann der zwischen Abdeckring und Rand der Tragplatte gebildete Spalt sich von der Spitze des Abdeckringes an bis zum Saatgutauslaß hin allmählich erweitern, so daß eineKlemmwirkung infolge Verkleinerung des Volumens der einzelnen Zelle nicht möglich ist. Das einzelne Samenkorn kann somit sicher und unmittelbar in den sich nach außen erweiternden Teil der Zelle eintreten und zur vorgesehenen Zeit leicht aus der Zelle durch den Saatgutauslaß auf das Feld gelangen.

Der Erfindungsgedanke läßt die verschiedensten Ausführungsmöglichkeiten zu. Eine davon ist in der anliegenden Zeichnung wiedergegeben, und zwar zeigen:

Fig. 1     Teil eines Vertikalschnittes durch das
           Einzelkornsägerät,

Fig. 2     einen Vertikalschnitt durch die Tragplatte,

Fig. 3     einen Vertikalschnitt durch das Zellenrad,

Fig. 4     einen Schnitt nach den Linien IV-IV in
           Fig. 1,

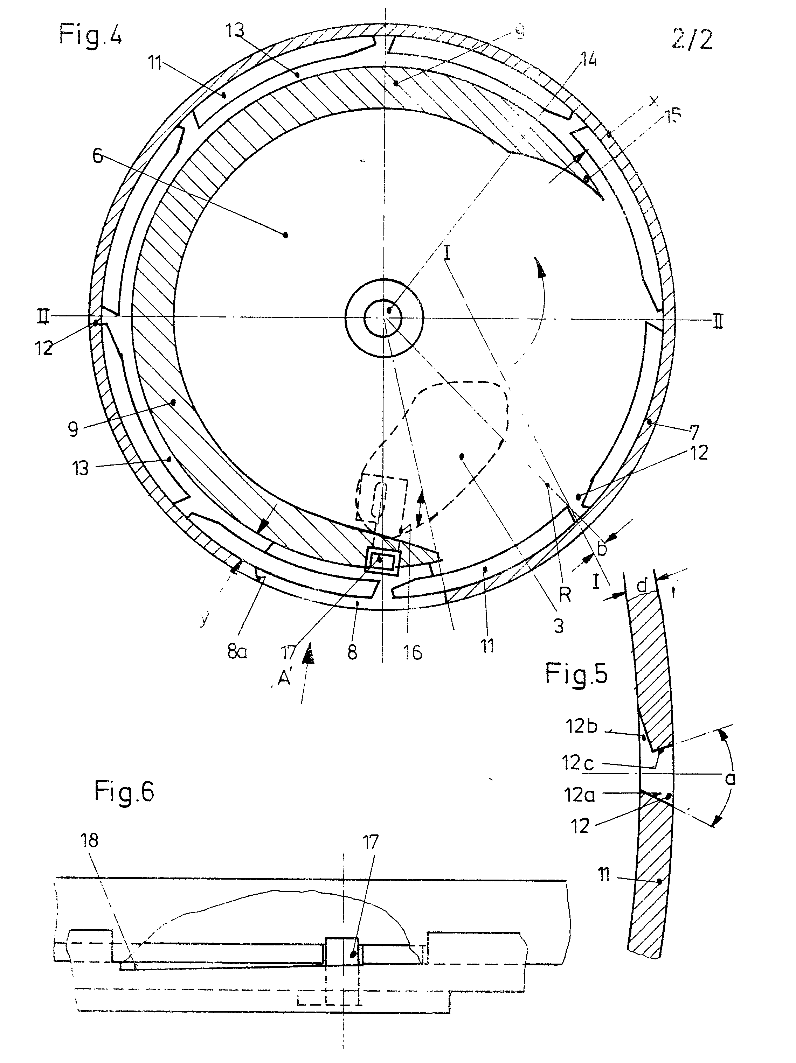

Fig. 5     einen Ausschnitt aus dem Rad des Zellenrades im vergrößernden Maßstab und

Fig. 6     eine Ansicht in Richtung des Pfeiles A in

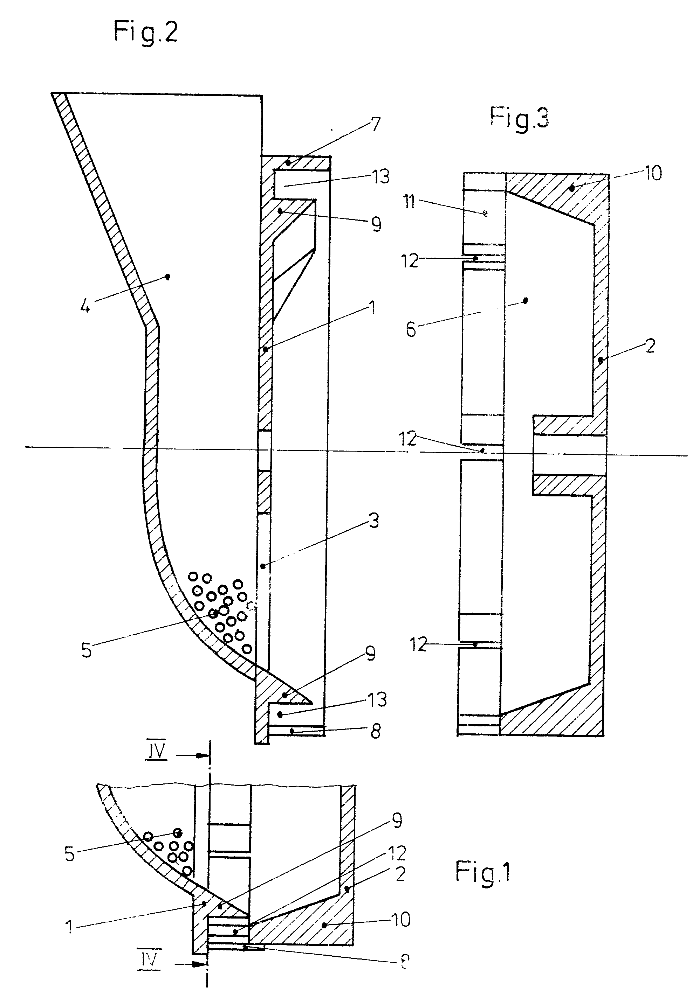

           Fig. 4 im vergrößernden Maßstab.

Das Sägerät besteht im wesentlichen aus einer kreisförmigen Tragplatte 1 und einem Zellenrad 2, welches auf
einer  nur in Fig. 4 dargestellten horizontalen Achse
14 an der Tragplatte 1 drehbar lagert und im Arbeitseinsatz in an sich bekannter Weise angetrieben wird.

Die Tragplatte 1 ist im unteren Teil mit einem Saatguteinlaß 3 und einem Zuführungstrichter 4 versehen,
in welchen die Samenkörner 5 von einem Vorratsbehälter
aus aufgegeben werden, so daß sie durch die Öffnung 3
hindurch in den zwischen den Scheiben 1 und 2 gebildeten
Saatgutvorratsraum 6 gelangen.

Auf der dem Zellenrad 2 zugekehrten Seite sitzt an der
Tragplatte 1 ein axial vorspringender Rand 7, mit dem
die Tragplatte den Umfang des Zellenrades 2 umfaßt. In diesem Rand 7 ist ein Saatgutauslaß 8 vorgesehen.
Außerdem sitzt an der Tragplatte 1 ein Abdeckring 9,
der noch später beschrieben werden soll.

Das Zellenrad bildet einen einseitig geschlossenen
Hohlzylinder 10, in dessen offenen Rand 11 Zellen 12
zur Aufnahme jeweils eines Samenkornes vorgesehen
sind. Der Rand 11 hat eine Dicke d, die der Größe
eines Samenkornes entspricht, so daß die einzelnen
Körner in den Zellen ohne mechanische Beanspruchung
mitgenommen werden.

Die Zellen 12 sind in gleichen Abständen über den Umfang des Zellenrades verteilt und sowohl randoffen
als auch radial nach außen offen. Mit dem Rand 11
faßt das Zellenrad 2, in einen Spalt 13 ein, der
an der Tragplatte 1 zwischen dem Rand 7 und dem Abdeckring 9 gebildet ist. Es läuft in der in Fig. 4
eingezeichneten Pfeilrichtung um.

Die die Zellen 12 bildenden Öffnungen oder Ausfräsungen im Rand 11 sind auf der, der Drehrichtung des
Zellenrades abgekehrten Seite durch eine Wand 12a
(Fig. 5) begrenzt, die in einer schräg zum Radius
des Zellenrades gerichteten, nach innen ansteigenden
Ebene I - I verläuft. Zum Radius R (Fig. 4) verläuft
die Wand 12a im Winkel b. Die gegenüberliegende Wand
der Zelle 12 weist dagegen eine Einlaufschute 12b und
auf dem äußeren Umfang des Randes 11 eine nach außen
sich erweiternde ausgefräste Erweiterung 12c auf, die
mit der Wand 12a einen Winkel a einschließt.

Die Einlaufschute 12b erleichtert den Eintritt eines Samenkornes 5 in die Zelle 12, wohingegen die sich nach außen hin öffnende Erweiterung 12c des Herausfallen des Samenkornes aus der Zelle 12 begünstigt. Durch die nach innen ansteigende rückwärtige Wand 12a wird jeweils beim Umlauf des Zellenrades in jeder Zelle ein Samenkorn aus dem in der Vorratskammer 6 befindlichen Samenvorrat mitgenommen und nach oben gefördert, bis es unter den innenliegenden Abdeckring 9 gelangt, der die Aufgabe hat, das Korn in der Zelle während des weiteren Umlaufs des Zellenrades zu halten. Die Schrägstellung der Wand 12a schützt das Korn vor einem vorzeitigen Zurückfallen, so daß der Abdeckring 9 verhältnismäßig kurz und der Beschickungsbereich für das Zellenrad sehr groß sein kann, was einen guten Beschickungsgrad ermöglicht.

Die Spitze 15 des Abdeckringes 9 liegt verhältnismäßig weit oberhalb der horizontalen Mittelebene II - II, so daß durch die relativ hohe Lage der Spitze die über die Mittelebene hinaus mitgenommenen Samen nicht so leicht zerrieben werden.

Der Winkel von der Spitze 15 des Abdeckringes 9 bis zum Saatgutauslaß 8 beträgt weniger als 270°, so daß das Korn bei seinem Transport unter dem Abdeckring hinweg nicht nennenswert mechanisch beansprucht wird. Diese Wirkung wird noch dadurch verbessert, daß sich der Spalt 13 von der Soitze 15 bis zum Saatgutauslaß 8 allmählich vom Maß x bis auf y verbreitert.

Schließlich ist im Abdeckring 9 über dem Saatgutauslaß 8 hinter der Abwurfkante 8a ein in einem
Langloch verstellbarer Auswerfer 16, 17 vorgesehen,
der das Samenkorn, falls es in der Zelle 12
hängengeblieben sein sollte, herausdrückt. Nach
dem Einbau des Zellenrades kann der Auswerfer bis
dicht an den Innendurchmesser des Zellenrades angestellt werden. Hinter der Abwurfkante 8a ist ein Keil
18 ausgearbeitet, der die Samen, die sich in der
Zelle befanden und durch Fliehkraft und Erdbeschleunigung herausfallen sollen, mehr Freiheit gibt. Längliche
Samen, die auf demTransportweg eingeklemmt waren,
können somit leicht herausfallen.

Patentansprüche:

1. Einzelkornsägerät, bestehend aus einem um eine horizontale Achse umlaufenden, aus einem einseitig abgeschlossenen Hohlzylinder gebildeten Zellenrad, welches in seinem offenen Rand, über den Umfang verteilt, Zellen zur Aufnahme jeweils eines Samenkorns aufweist und einer feststehenden den Saatguteintritt aufweisenden Abdeckwand, die mit einem rundumlaufenden axial vorspringenden, lediglich den Saatgutaustritt freilassenden Rand das Zellenrad auf der Außenseite umfaßt, während innerhalb dieses Randes ein Abdeckring vorgesehen ist, der das Herausfallen der beim Umlauf des Zellenrades durch die Zellen aufgenommenen Samenkörner bis zum Saatgutaustritt hin verhindert, wobei die Zellen auf der der Drehrichtung des Zellenrades abgekehrten Seite jeweils durch eine Wand begrenzt sind, die in Drehrichtung gesehen von innen nach außen in einem nach hinten geneigten Winkel zur Ringfläche verläuft, dadurch gekennzeichnet, daß die die Zelle (12) bildende Öffnung auf der Außenseite des Zellenrades (2) in eine nach außen gerichtete ausgefräste Erweiterung (12c) übergeht.

2. Einzelkornsägerät nach Anspruch 1, dadurch gekennzeichnet, daß der zwischen Abdeckring (9) und Rand (7) der Tragplatte (1) gebildete Spalt (13) sich von der Spitze (15) des Abdeckrings (9) an bis zum Saatgutauslaß (8) hin allmählich erweitert.

Fig.2

Fig.3

Fig.1

Fig.4

Fig.5

Fig.6

Europäisches
Patentamt

**EUROPÄISCHER RECHERCHENBERICHT**

0026926

Nummer der Anmeldung

EP 80 10 5987.4

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| | US - A - 3 951 306 (A.E. ERNST)<br>* Spalte 4, Zeilen 62 bis 65;<br>Fig. 10, 13 *<br>-- | 1 | A 01 C 7/04 |
| A | DE - U - 7 539 067 (F. KLEINE)<br>* Fig. 1 bis 4 *<br>-- | 1 | |
| A | DE - A - 1 457 829 (W. KNOLLE)<br>* Fig. 17c *<br>-- | 1 | |
| P,A | DE - A1 - 2 829 156 (F. KLEINE MASCHINENFABRIK)<br>* Fig. 1 bis 4 *<br>-- | 1 | RECHERCHIERTE SACHGEBIETE (Int. Cl.3) |
| D,A | FR - E - 95 940 (ETABLISSEMENTS BEAUVAIS & ROBIN)<br>* ganzes Dokument *<br>---- | 1 | A 01 C 7/04 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-01-1981 | SCHOFER |

EPA form 1503.1 06.78